# EUROPÄISCHE PATENTSCHRIFT

(11) **EP 2 404 808 B1**
(45) Veröffentlichungstag und Bekanntmachung des Hinweises auf die Patenterteilung: **09.07.2014**
(21) Anmeldenummer: 11166565.9
(22) Anmeldetag: 18.05.2011
(51) Int. Cl.: B62D 9/00, B62D 12/00

(54) **Kraftfahrzeug mit Achsschenkel- und Knicklenkung**
Motor vehicle with axle leg and articulated steering
Véhicule automobile doté d'une fusée d'essieu ou d'une direction articulée

(30) Priorität: 21.05.2010 DE 102010021178
(43) Veröffentlichungstag der Anmeldung: 11.01.2012
(73) Patentinhaber: Neumaier Industry GmbH & Co. KG, 77716 Hofstetten (DE)
(72) Erfinder: Neumaier, Bernd, 77716, Hofstetten (DE)
(74) Vertreter: Patentanwälte Ruff, Wilhelm, Beier, Dauster & Partner

(56) Entgegenhaltungen:
- EP-A2- 1 174 329
- DE-C1- 4 137 382
- JP-A- 2 127 171
- US-A1- 2005 139 412

## Beschreibung

Die Erfindung bezieht sich auf ein Kraftfahrzeug mit einem vorderen Fahrzeugteil, der ein oder mehrere Vorderräder aufweist, einem hinteren Fahrzeugteil, der ein oder mehrere Hinterräder aufweist, einer Achsschenkellenkung zur Einstellung eines Achsschenkel-Lenkwinkels an dem oder den Vorder- und/oder Hinterrädern und einer Knicklenkung zur Einstellung eines Knicklenkwinkels, um den der vordere und der hintere Fahrzeugteil gegeneinander um eine vertikale Achse drehbar sind. Unter Achsschenkellenkung ist dabei vorliegend jedwede Lenkung zu verstehen, die eine Lenkbewegung des oder der betreffenden Räder relativ zum zugehörigen übrigen Fahrzeugteil bewirkt. Insbesondere kann es sich bei diesem Kraftfahrzeug um ein landwirtschaftliches Zugfahrzeug, d.h. einen Traktor, handeln.

Die Offenlegungsschrift DE 29 09 970 A1 offenbart ein Kraftfahrzeug dieser Art, das als Transportfahrzeug ausgebildet ist, dessen vorderer Fahrzeugteil mit Fahrkabine, Antriebsaggregat und einer vom Fahrer über ein Lenkrad betätigten Achsschenkellenkung ausgerüstet ist und dessen hinterer Fahrzeugteil als Transportmittel ausgebildet ist. In einer Ausführungsart sind Achsschenkellenkung und Knicklenkung durch eine teleskopartig längenveränderliche Verbindungsstange mechanisch zwangsgekoppelt. In einer alternativen Ausführung beinhaltet die Knicklenkung eine die beiden Fahrzeugteile koppelnde Verschiebeeinrichtung, die in ihrer Länge hydraulisch oder elektrisch betätigt veränderbar ist. Optional ist die Verschiebeeinrichtung am vorderen Fahrzeugteil mit der Achsschenkellenkung gekoppelt. Für Geradeausfahrt kann die Knicklenkung durch Arretierung in Nullstellung deaktiviert werden. Weiterhin ist vorgesehen, bei hoher Fahrgeschwindigkeit eine Fehlauslösung der Knicklenkung mittels Sicherheitseinrichtungen zu verhindern.

Die Offenlegungsschrift DE 39 03 400 A1 offenbart ein weiteres gattungsgemäßes Kraftfahrzeug, bei dem eine mechanische Zwangskopplung von Achsschenkellenkung und Knicklenkung mittels einer entsprechenden Koppellenkstange vorgesehen ist. Über zugehörige hydraulische Arbeitszylinder der Knicklenkung wird ein gewünschter Knickwinkel eingestellt, und die Koppellenkstange sorgt für eine damit gekoppelte Aktivierung der Achsschenkellenkung. Bei einer konkreten Ausführungsform ist die Kopplung durch die Lenkstange so gewählt, dass der Achsschenkel-Lenkwinkel jeweils ungefähr dem Knicklenkwinkel entspricht, z.B. bei vollem Lenkeinschlag jeweils ca. 45°. Verwendet wird dieses Lenksystem insbesondere für motorisierte Arbeitsgeräte wie Kehrmaschinen, Schneepflüge, Mähmaschinen, Flurförderer und Baustellenfahrzeuge.

Bei den oben genannten Kraftfahrzeugen handelt es sich typischerweise um solche, die im Wesentlichen nur in einem Nutzbetrieb bei relativ niedrigen Geschwindigkeiten eingesetzt werden. Für einen reinen Fahrbetrieb z.B. im Straßenverkehr über größere Strecken und in einem Bereich höherer Fahrgeschwindigkeiten sind sie hingegen wegen der mechanischen Zwangskopplung von Achsschenkellenkung und Knicklenkung wenig geeignet bzw. nicht bestimmt.

Aus der EP 1 567 403 B1 ist ein lediglich knickgelenktes Fahrzeug bekannt, bei dem der Lenkwinkel sowie die Fahrzeuggeschwindigkeit mittels Sensoren erfasst und einer Regelelektronik zugeführt werden und das Lenkverhalten abhängig von der Fahrgeschwindigkeit beeinflusst wird.

Die Offenlegungsschrift JP 02-127171 A offenbart ein gattungsgemäßes Landmaschinenfahrzeug mit kombinierter Knicklenkung und wahlweise ein- oder beidachsiger Achsschenkellenkung. In einem Bereich niedriger Geschwindigkeit von z.B. weniger als 3 km/h ist die Achsschenkellenkung beidachsig und die Knicklenkung aktiv. In einem mittleren Geschwindigkeitsbereich von z.B. zwischen 3 km/h und 10 km/h ist die Achsschenkellenkung beidseitig aktiv, die Knicklenkung ist inaktiv. In einem höheren Geschwindigkeitsbereich von z.B. mehr als 10 km/h ist nur die Achsschenkellenkung an der Vorderachse aktiv. Der maximale Lenkwinkel beträgt für die Knicklenkung und die Achsschenkellenkung jeweils ca. 30°.

Die Offenlegungsschrift US 2005/0139412 A1 offenbart ein Fahrzeug, insbesondere ein Frontladerfahrzeug, mit einer Knicklenkung, wobei vorzugsweise zwei Lenkbedienelemente parallel vorgesehen sind, ein Lenkrad und ein Lenkhebel. Im Unterschied zu klassischen derartigen Systemen, bei denen das Lenkrad während eines Transportbetriebs mit höherer Geschwindigkeit und der Lenkhebel während eines Ladebetriebs mit niedrigerer Geschwindigkeit benutzt werden, soll ein Lenkbedienelement so ausgelegt werden, dass es in beiden Betriebssituationen benutzt werden kann, ohne ein ungünstiges Lenkverhalten zu verursachen. Dazu werden für das Lenkbedienelement fahrgeschwindigkeitsabhängig unterschiedliche Kennlinien für die Geschwindigkeit der Lenkwinkeleinstellung in Abhängigkeit von der Zeit vorgegeben.

Der Erfindung liegt als technisches Problem die Bereitstellung eines Kraftfahrzeugs der eingangs genannten Art zugrunde, das sich vergleichsweise gut sowohl für einen (Nutz-)Betrieb in einem Bereich niedrigerer Fahrgeschwindigkeiten als auch für einen (reinen Fahr-)Betrieb in einem Bereich höherer Fahrgeschwindigkeiten z.B. während Straßenfahrt verwenden lässt.

Die Erfindung löst dieses Problem durch die Bereitstellung eines Kraftfahrzeuges mit den Merkmalen des Anspruchs 1. Bei diesem Kraftfahrzeug ist die Knicklenkung darauf ausgelegt, den Knicklenkwinkel in Abhängigkeit von einer Fahrgeschwindigkeit des Kraftfahrzeuges gemäß einer Knicklenkwinkel/Fahrgeschwindigkeits-Charakteristik variabel derart einzustellen, dass der Knicklenkwinkel mit steigender Fahrgeschwindigkeit innerhalb eines vorgebbaren Fahrgeschwindigkeitsbereichs sukzessive abnimmt. Dadurch kann der Knicklenkwinkeleinschlag an die Fahrgeschwindigkeit angepasst werden, so dass sich das Kraftfahrzeug in seinem Lenkverhalten optimal auf die momentane Fahrgeschwindigkeit abstimmen lässt. Das Kraftfahrzeug kann damit sowohl in einem Bereich niedrigerer Fahrgeschwindigkeiten, typischerweise im Nutzbetrieb, als auch in einem Bereich höherer Fahrgeschwindigkeiten, typischerweise im reinen Fahrbetrieb, gleichermaßen gut verwendet werden.

In Weiterbildung der Erfindung ist die Knicklenkwinkel/Fahrgeschwindigkeits-Charakteristik in Abhängigkeit vom Achsschenkel-Lenkwinkel vorgebbar.

In einer vorteilhaften Weiterbildung der Erfindung ist die Knicklenkung darauf ausgelegt, den Knicklenkwinkel mit bis zu einem vorgebbaren Schwellwert ansteigender Fahrgeschwindigkeit abnehmend einzustellen und ihn bei über dem Schwellwert liegender Fahrgeschwindigkeit konstant, insbesondere in einer Nullstellung, zu halten. Die Aktivität der Knicklenkung wird in diesem Fall mit ansteigender Fahrgeschwindigkeit sukzessive zurückgenommen. Dies erlaubt einerseits einen starken Knicklenkungseinfluss bei niedrigen Geschwindigkeiten und gewährleistet andererseits einen sicheren Fahrbetrieb im höheren Geschwindigkeitsbereich. In einer Ausgestaltung dieser Maßnahme liegt der Fahrgeschwindigkeits-Schwellwert zwischen ca. 5km/h und ca. 50km/h, z.B. bei ca. 20 km/h.

In einer Weiterbildung der Erfindung ist die Knicklenkung darauf ausgelegt, den Knicklenkwinkel mit ansteigendem Achsschenkel-Lenkwinkel in einem niedrigeren Fahrgeschwindigkeitsbereich ansteigend und in einem höheren Fahrgeschwindigkeitsbereich abnehmend einzustellen. Auch dies trägt weiter zur optimalen Abstimmung von Achsschenkellenkung und Knicklenkung bei, um das Fahrzeug, z.B. einen Traktor, sowohl für einen Nutzbetrieb mit typischerweise niedrigerer Geschwindigkeit und einen Straßenfahrbetrieb mit typischerweise höherer Geschwindigkeit gleichermaßen gut tauglich zu machen.

In einer Weiterbildung der Erfindung beträgt ein Maximalwert (Einstellwert) für den Knicklenkwinkel zwischen 20% und 40% eines Maximalwertes für den Achsschenkel-Lenkwinkel. Dies begrenzt zugunsten einer hohen Fahrstabilität die maximale Knicklenkungswirkung bezogen auf die Wirkung der Achsschenkellenkung.

In einer Weiterbildung der Erfindung beträgt ein Maximalwert für den Knicklenkwinkel zwischen ca. 10° und ca. 50°, z.B. ca. 15°, und/oder ein Maximalwert für den Achsschenkellenkwinkel zwischen 30° und 70°, z.B. ca. 50°. Je nach Fahrzeugtyp kann damit der Knicklenkwinkel bzw. der Achsschenkel-Lenkwinkel geeignet begrenzt werden.

In einer Weiterbildung der Erfindung ist die Achsschenkellenkung darauf ausgelegt, den Achsschenkellenkwinkel gemäß einer Fahrerlenkvorgabe einzustellen und die Knicklenkung ist darauf ausgelegt, einen Knicklenkwinkel-Sollwert abhängig von einer Istwertinformation des Achsschenkel-Lenkwinkels festzulegen. Damit kann der Knicklenkwinkel vom Lenksystem selbsttätig je nach dem vorliegenden Achsschenkel-Lenkwinkel eingestellt bzw. nachgeführt werden.

Vorteilhafte Ausführungsformen der Erfindung sind in den Zeichnungen dargestellt und werden nachfolgend beschrieben. Hierbei zeigen:
- Fig. 1: eine schematische Draufsicht auf ein landwirtschaftliches Zugfahrzeug mit einem Lenksystem mit kombinierter Achsschenkelund Knicklenkung in Geradeausfahrt-Stellung,
- Fig. 2: die Ansicht von Fig. 1 bei maximalem Lenkeinschlag des Lenksystems,
- Fig. 3: ein Blockdiagramm des Lenksystems von Fig. 1 und
- Fig. 4: ein Kennliniendiagramm zur Veranschaulichung der Knicklenkwinkelcharakteristik in Abhängigkeit von Fahrgeschwindigkeit und Achsschenkel-Lenkwinkel für das Lenksystem von Fig. 1.

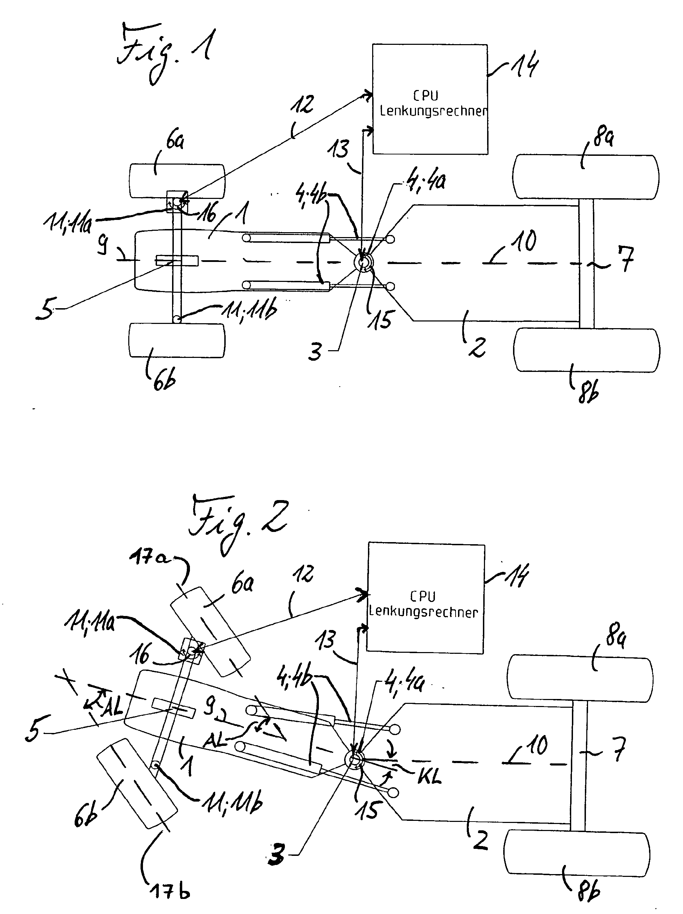

Das in den Fig. 1 und 2 in Draufsicht schematisch dargestellte landwirtschaftliche Zugfahrzeug weist einen vorderen Fahrzeugteil 1 und einen hinteren Fahrzeugteil 2 auf, die mittels eines Drehgelenks 4a einer Knicklenkung 4 um eine vertikale Knicklenkachse 3 gegeneinander drehbeweglich gekoppelt sind. Am vorderen Fahrzeugteil 1 ist eine als Pendelachse, alternativ als irgendeine andere Lenkachskonstruktion ausgebildete Vorderachse 5 mit zwei Vorderrädern 6a, 6b montiert. Am hinteren Fahrzeugteil 2 ist eine starre Hinterachse 7 mit zwei Hinterrädern 8a, 8b montiert.

Zur Bewirkung der Knicklenkbewegung, d.h. der relativen Verdrehung von vorderem und hinterem Fahrzeugteil 1, 2 um die vertikale Knicklenkachse 3, weist die Knicklenkung 4 zwei parallele, gegenseitig ansteuerbare Hydraulikzylinder 4b auf, die beidseits der Knicklenkachse 3 jeweils zum einen am vorderen Fahrzeugteil 1 und zum anderen am hinteren Fahrzeugteil 2 angelenkt sind. Durch Verlängern des einen und gleichzeitiges Verkürzen des anderen Hydraulikzylinders 4b lässt sich ein Knicklenkwinkel KL verändern, der durch den Winkel definiert ist, den eine Längsachse 9 des vorderen Fahrzeugteils 1 mit einer Längsachse 10 des hinteren Fahrzeugteils 2 einschließt.

Die Vorderräder 6a, 6b sind über eine Achsschenkellenkung 11 mit je einer zugehörigen Achsschenkellenkeinheit 11a, 11 b um eine entsprechende Achsschenkellenkachse drehbeweglich an der Vorderachse 5 angelenkt. Die Achsschenkellenkung 11 stellt dadurch einen entsprechenden Achsschenkel-Lenkwinkel AL variabel ein, der durch das arithmetische Mittel AL=(AL1+AL2)/2 der Lenkwinkel AL1, AL2 von kurveninnerem bzw. kurvenäußerem Rad definiert ist, um welche die Richtung einer jeweils zugehörigen Vorderrad-Längsachse 17a, 17b von der Richtung der Längsachse 9 des vorderen Fahrzeugteils 1 bzw. der in Fig. 1 gezeigten Geradeausfahrt-Stellung abweicht.

Über je einen Leitungssatz 12, 13 stehen die Achsschenkellenkung 11 und die Knicklenkung 4 mit einer zentralen Lenksteuereinheit 14, z.B. einem Lenkungsrechner mit einer Zentralprozessoreinheit (CPU), in bidirektionaler Signalverbindung. Im Übrigen sind die Achsschenkellenkung 11 und die Knicklenkung 4 von irgendeiner der herkömmlich hierfür verwendeten Bauarten.

Die Knicklenkung 4 beinhaltet einen Knicklenkwinkelsensor 15, der den Knicklenkwinkel-Istwert, d.h. den momentan eingestellten Wert des Knicklenkwinkels KL, erfasst und an die Lenkungssteuerung Lenksteuereinheit 14 übermittelt. Analog beinhaltet die Achsschenkellenkung 11 einen Radlenkwinkelsensor 16, der den Istwert, d.h. den momentan eingestellten Wert, des Achsschenkel-Lenkwinkels AL erfasst und an die Lenkungssteuerung 14 meldet.

In umgekehrter Signalrichtung gibt die Lenksteuereinheit 14 Stellbefehle an die Knicklenkung 4 und bei Bedarf auch an die Achsschenkellenkung 11 ab. In der Lenksteuereinheit 14 sind geeignete Regel- oder Steueralgorithmen der Knicklenkung 4 und der Achsschenkellenkung 11 implementiert. Die Implementierung umfasst insbesondere eine Auslegung der Knicklenkung 4 derart, dass diese den Knicklenkwinkel KL sowohl in Abhängigkeit vom Achsschenkel-Lenkwinkel AL als auch in Abhängigkeit von einer Fahrgeschwindigkeit des Zugfahrzeugs einstellt.

Durch die Kombination von Achsschenkellenkung 11 und Knicklenkung 4 genügt die Einstellung vergleichsweise geringer Knicklenkwinkelwerte für die Erzielung eines ausreichend engen Wendekreises. Die Vermeidung größerer Knicklenkwinkel begünstigt die Standsicherheit des Zugfahrzeugs, wobei vorzugsweise mit höherer Fahrgeschwindigkeit die Aktivität der Knicklenkung 4 bzw. der gewählte Knicklenkwinkelwert reduziert wird. Das Zugfahrzeug kann auf diese Weise problemlos im normalen Straßenverkehr auch in einem höheren Geschwindigkeitsbereich von z.B. über 20 km/h bzw. bis ca. 80km/h gefahren und andererseits in einem Nutzbetrieb bei niedrigeren Geschwindigkeiten von z.B. kleiner als 20km/h durch stärkeren Einsatz der Knicklenkung sehr wendig gefahren werden. Dies ermöglicht bei Bedarf eine relativ große bzw. lange Bauform des hinteren Fahrzeugteils 2, um dort z.B. diverse Funktionsaufbauten für landwirtschaftliche Arbeitsgeräte oder dgl., wie Zusatzgeräte, Maschinen und Werkzeuge für Straßenunterhaltung, Land-, Forst- und Kommunalwirtschaft, Versorgungs- und Montagearbeiten, Energie- und Stromnetze, Feuerwehr etc., bereitzustellen, und einen vergleichsweise langen Radstand, d.h. Abstand von Vorder- zu Hinterachse, der eine hohe Standsicherheit bietet.

Es zeigt sich, dass eine beispielsweise für Traktoren günstige Implementierung die Maßnahme beinhaltet, den Knicklenkwinkel KL bei gegebenem Achsschenkel-Lenkwinkel AL mit bis zu einem vorgebbaren Schwellwert ansteigender Fahrgeschwindigkeit bis auf null abnehmend einzustellen und ihn bei darüberliegenden Fahrgeschwindigkeiten auf null zu halten. Der Fahrgeschwindigkeits-Schwellwert kann z.B. zwischen 5 km/h und 50km/h, bevorzugt zwischen 15km/h und 30km/h liegen. Weiter hat sich als günstig erwiesen, einen Maximalwert für den Knicklenkwinkel zwischen 20% und 40% eines Maximalwertes für den Achsschenkel-Lenkwinkel und/oder im Bereich zwischen ca. 10° und ca. 50° zu wählen und/oder den Maximalwert für den Achsschenkel-Lenkwinkel zwischen ca. 30° und ca. 70° zu wählen. Dies bedeutet einen guten Kompromiss zwischen Wendigkeit des Fahrzeugs insbesondere im Nutzbetrieb und ausreichender Standfestigkeit im reinen Straßenfahrbetrieb. In die Lenkwinkelberechnung können je nach Anwendungsfall ein oder mehrere weitere Parameter eingehen, z.B. die Neigung in Quer- und Längsrichtung und/oder der Beladungszustand. Damit kann im Gelände berechnet werden, wann sich der Massenschwerpunkt des Fahrzeuges der Kipplinie nähert, um rechtzeitig die möglichen Lenkwinkel zu beschränken und/oder ein Warnsignal an den Fahrer zu senden.

Fig. 2 zeigt ein bevorzugtes Ausführungsbeispiel mit maximalem Lenkeinschlag von Knicklenkung 4 und Achsschenkellenkung 11, wobei für den Knicklenkwinkel KL ein Maximalwert von 15° und für den Achsschenkel-Lenkwinkel AL ein Maximalwert von 50° gewählt sind.

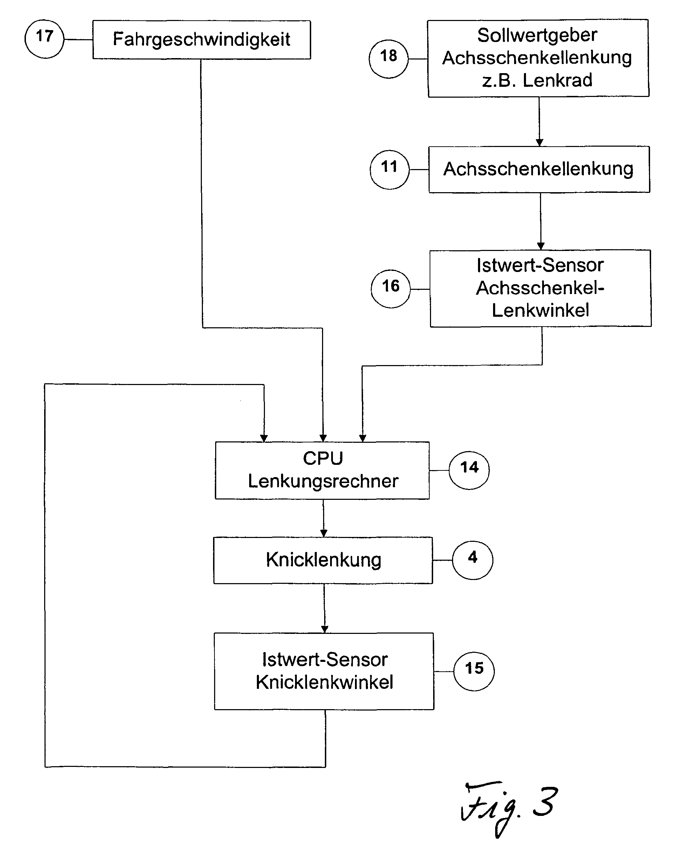

Fig. 3 veranschaulicht die Funktionsweise des Lenksystems des Traktors der Fig. 1 und 2 mit kombinierter Knick- und Achsschenkellenkung 4, 11 in Blockdiagrammform. Ein üblicher Fahrgeschwindigkeitssensor 17 erfasst die momentane Fahrgeschwindigkeit des Traktors und meldet diese an die Lenkungssteuerung 14. Ein Achsschenkellenkungs-Sollwertgeber 18 gibt für die Achsschenkellenkung 11 einen Sollwert für den einzustellenden Achsschenkel-Lenkwinkel vor Dieser Sollwertgeber kann z.B. durch ein übliches Lenkrad realisiert sein, mit dem der Fahrer entsprechend auf die Achsschenkellenkung 11 einwirkt. Über ein zugehöriges Stellglied stellt die Achsschenkellenkung 11 den gewünschten Achsschenkel-Lenkwinkel ein, d.h. es steuert oder regelt dessen Istwert auf den gewünschten Sollwert. Der Achsschenkel-Lenkwinkelsensor 16 erfasst den Istwert des Achsschenkel-Lenkwinkels und meldet diese Information an die Lenksteuereinheit 14.

Die Lenksteuereinheit 14 ermittelt anhand des in ihr hierzu implementierten Algorithmus einen Sollwert für den einzustellenden Knicklenkwinkel in Abhängigkeit von den Eingangsgrößen, d.h. der momentanen Fahrgeschwindigkeit und des eingestellten Istwerts des Achsschenkel-Lenkwinkels sowie der optionalen weiteren Eingangsparameter wie Neigung in Quer- und Längsachsenrichtung und Beladung. Je nach Bedarf und Anwendungsfall können noch weitere Eingangsgrößen für die Festlegung des Knicklenkwinkel-Sollwerts herangezogen werden, wie Informationen über die Lenkgeschwindigkeit der Achsschenkellenkung, den befahrenen Untergrund, die aktuelle Fahrsituation und/oder ein momentan gewähltes Fahrprogramm. Den so ermittelten Knicklenkwinkel-Sollwert gibt die Lenksteuereinheit 14 an die Knicklenkung 4 ab, die für eine entsprechende Einstellung des Knicklenkwinkels sorgt, d.h. dessen Istwert auf den gewünschten Sollwert steuert bzw. regelt. Der Knicklenkwinkelsensor 15 erfasst den Knicklenkwinkel-Istwert und meldet diese Information an die Lenksteuereinheit 14 im Sinne einer Knicklenkwinkelregelung zurück.

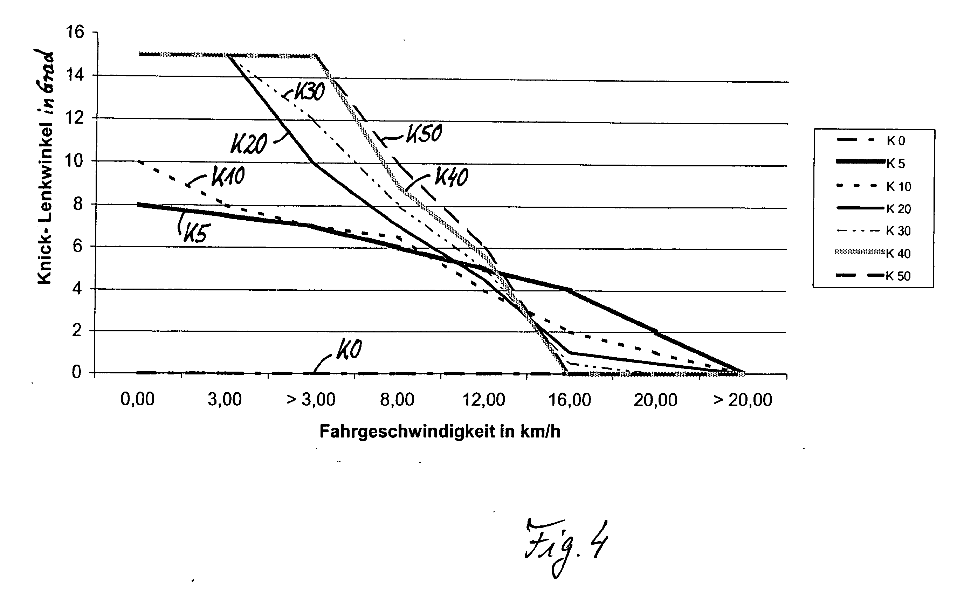

Im Diagramm von Fig. 4 ist eine mögliche, vorteilhafte Implementierung für die Wahl der Abhängigkeit des einzustellenden Knicklenkwinkels KL von der Fahrgeschwindigkeit v veranschaulicht. Speziell ist die Knicklenkwinkel/Fahrgeschwindigkeits-Charakteristik qualitativ anhand von sieben Kennlinien für verschiedene Werte des Achsschenkel-Lenkwinkels AL illustriert. Wie daraus ersichtlich, nimmt der Knicklenkwinkel KL bei gegebenem Achsschenkel-Lenkwinkel AL mit steigender Fahrgeschwindigkeit v innerhalb eines niedrigeren Fahrgeschwindigkeitsbereichs zwischen 0km/h und ca. 20km/h sukzessive ab, d.h. die Aktivität bzw. der Einfluss der Knicklenkung wird entsprechend reduziert. In einem niedrigeren Fahrgeschwindigkeitsbereich von 0km/h bis ca. 10km/h nimmt der Knicklenkwinkel KL bei gegebener Fahrgeschwindigkeit v mit ansteigendem Achsschenkel-Lenkwinkel AL zu, während er in einem höheren Geschwindigkeitsbereich zwischen ca. 16km/h und ca. 20km/h bei gegebener Fahrgeschwindigkeit v mit zunehmendem Achsschenkel-Lenkwinkel AL abnimmt. Fig. 4 zeigt dazu beispielhaft den qualitativen Verlauf des Knicklenkwinkels KL in Abhängigkeit von der Fahrgeschwindigkeit v bei einem Achsschenkel-Lenkwinkel AL von 0° mit einer Kennlinie K0, bei einem Achsschenkel-Lenkwinkel AL von 5° mit einer Kennlinie K5, bei einem Achsschenkel-Lenkwinkel AL von 10° mit einer Kennlinie K10, bei einem Achsschenkel-Lenkwinkel AL von 20° mit einer Kennlinie K20, bei einem Achsschenkel-Lenkwinkel AL von 30° mit einer Kennlinie K30 bei einem Achsschenkel-Lenkwinkel AL von 40° mit einer Kennlinie K40 und bei einem maximalen Achsschenkel-Lenkwinkel AL von 50° mit einer Kennlinie K50.

Speziell bleibt bei einem Achsschenkel-Lenkwinkel AL von 0° auch der Knicklenkwinkel KL auf 0° für Geradeausfahrt. Bei einem Achsschenkel-Lenkwinkel AL von ca. 5° bis ca. 10° fällt in diesem Implementierungsbeispiel der Knicklenkwinkel KL relativ gleichmäßig von einem maximalen Wert von ca. 8° bis 10° bei Geschwindigkeiten nahe null auf einen Wert von ca. 1° bis 2° bei einer Geschwindigkeit von 20km/h ab. Bei einem Achsschenkel-Lenkwinkel AL von ca. 20° bis zum maximalen Achsschenkel-Lenkwinkel von ca. 50° wird der Knicklenkwinkel KL für kleine Fahrgeschwindigkeiten zunächst auf seinem maximalen Wert von ca. 15° gehalten, bis er dann ab einer Fahrgeschwindigkeit zwischen ca. 3km/h bis ca. 6km/h sukzessive bis null bei einer Fahrgeschwindigkeit von ca. 16km/h bis 20km/h reduziert wird. Bei Fahrgeschwindigkeiten über 20km/h wird der Knicklenkwinkel KL unabhängig vom Achsschenkel-Lenkwinkel AL auf null gehalten.

Insgesamt ergeben sich durch eine derartige fahrgeschwindigkeitsabhängige Variation des Knicklenkwinkels KL verschiedene Lenkmodi für einen optimalen Einsatz des Fahrzeugs. Bei sehr niedrigen Geschwindigkeiten von z.B. bis ca. 3 km/h wird bei minimalem, vom Fahrer aber z.B. über das Lenkrad noch gut dosierbarem Verstellweg ein möglichst großer Knicklenkwinkel durch die Knicklenkung eingestellt. Damit kann der Fahrer im Nutzbetrieb, z.B. bei Frontladerarbeiten, das Arbeitsgerät, z.B. die Frontladerschaufel, gut positionieren, ohne dass sich der Traktor merklich vorwärts oder rückwärts bewegen muss. In einem mittleren Geschwindigkeitsbereich zwischen ca. 3 km/h bis 20 km/h wird die Aktivität der Knicklenkung im Verhältnis zur Aktivität der Achsschenkellenkung sukzessive reduziert. Bei Fahrgeschwindigkeiten über ca. 20 km/h bleibt die Knicklenkung deaktiviert. Der Fahrzeugdynamik entsprechende Kurvenfahrten werden in diesem reinen Fahrbetrieb allein durch die Achsschenkellenkung bewirkt. Die Begrenzung des maximalen Knicklenkwinkels auf vorzugsweise nicht mehr als 30°, z.B. auf nur 15°, begünstigt eine hohe Standsicherheit. Trotzdem lässt sich durch die zusätzliche Knicklenkung für das Fahrzeug die gleiche Wendigkeit erreichen wie für ein vergleichbares Fahrzeug ohne Knicklenkung mit einem um ca. 2,5 m kürzeren Randstand.

Es versteht sich, dass die in Fig. 4 illustrierte Implementierung lediglich qualitativ und exemplarisch zu verstehen ist. Im konkreten Fall können die Kennlinien bzw. die fahrgeschwindigkeitsabhängige Knicklenkwinkelcharakteristik z.B. einen gestuften oder einen insgesamt oder abschnittsweise stetigen Verlauf haben. Die Erfindung umfasst selbstverständlich auch andere als die in Fig. 4 gezeigte Implementierungen der Knicklenkwinkelcharakteristik in Abhängigkeit von Fahrgeschwindigkeit v und Achsschenkel-Lenkwinkel AL, die geeignet sind, dem Fahrzeug in einem niedrigen Geschwindigkeitsbereich eine gegenüber einer alleinigen Achsschenkellenkung erhöhte Wendigkeit zu verleihen und in einem reinen Fahrbetrieb bei höheren Fahrgeschwindigkeiten durch reduzierten Knicklenkungseinfluss eine hohe Standsicherheit des Fahrzeugs zu gewährleisten.

Im oben erläuterten Ausführungsbeispiel steuert bzw. regelt die Lenkungssteuerung 14 den Knicklenkwinkel KL unter Berücksichtigung des erfassten und rückgemeldeten Istwerts des Achsschenkel-Lenkwinkels AL. In alternativen Ausführungsformen der Erfindung sind auch andere Lenksystemauslegungen möglich. So kann in einem anderen Ausführungsbeispiel die Lenkungssteuerung eine vom Fahrer z.B. an einem herkömmlichen Lenkrad oder an einem Joystick oder drehbaren Inkrementtalgeber oder Winkelgeber bewirkte Lenkvorgabe über Sensoren erfassen und abhängig davon sowohl die Achsschenkellenkung zur Einstellung eines entsprechenden Achsschenkel-Lenkwinkels als auch die Knicklenkung zur Einstellung eines entsprechenden Knicklenkwinkels ansteuern, wobei wie im gezeigten Ausführungsbeispiel die Achsschenkellenkung und die Knicklenkung als voneinander getrennte und entkoppelte Lenkungsteilsysteme realisiert sein können. In diesem Fall ist dann die Fahrerlenkvorgabe nicht an die Achsschenkellenkung, sondern an die Lenkungssteuerung gekoppelt.

Es versteht sich, dass unabhängig von der konkreten Implementierung der Lenkalgorithmen für Achsschenkellenkung und Knicklenkung die Lenkungssteuerung darauf ausgelegt sein kann, die Plausibilität der Aktivitäten von Achsschenkellenkung und Knicklenkung anhand der von diesen übertragenen Informationen, insbesondere deren Lenkwinkel-Istwerte, kontinuierlich zu überprüfen und bei erkanntem unplausiblem Verhalten ein entsprechendes Warnsignal abzugeben.

Es versteht sich weiter, dass je nach Systemrealisierung die Lenkungssteuerung vollständig oder teilweise in die Achsschenkellenkung und/oder die Knicklenkung integriert oder als vollständig eigenständige Baueinheit ausgeführt sein kann.
In einer vorteilhaften Ausführungsform kann vorgesehen sein, dass die Knicklenkung vom Fahrer wahlweise blockiert oder freigegeben werden kann. Bei blockierter Knicklenkung wird das Fahrzeug dann allein mit der Achsschenkellenkung gelenkt, bei freigegebener Knicklenkung wird das Fahrzeug in der oben erläuterten Weise kombiniert mit Achsschenkellenkung und Knicklenkung gelenkt.

Im oben erläuterten Ausführungsbeispiel wirkt die Achsschenkellenkung nur auf die Vorderräder ein. Die Erfindung umfasst darüber hinaus selbstverständlich auch Ausführungsformen, bei denen die Achsschenkellenkung nur auf die Hinterräder wirkt oder bei denen im Sinne eines Allrad-Lenksystems sowohl die Vorderräder als auch die Hinterräder durch eine Achsschenkellenkung lenkbar sind.

Durch die erfindungsgemäße Kombination von Knicklenkung und Achsschenkellenkung und dem dadurch ermöglichten verlängerten Radstand bei gleichbleibender Wendigkeit lässt sich der weitere Vorteil erzielen, dass das Fahrzeug mit einer Fahrerkabine ausgerüstet werden kann, die nicht mehr die herkömmlichen Kotflügeltaschen für die Hinterräder benötigt, da sich die Hinterachse relativ weit nach hinten verlagern lässt, wie für die Hinterachse 7 im Ausführungsbeispiel der Fig. 1 und 2 gezeigt. Dadurch bietet sich die Möglichkeit, einen stufenlos bzw. endlos drehbaren Fahrerstand einschließlich mitdrehbarer Bedienelemente, wie Fußpedale für Bremse und Kupplung, bereitzustellen. In einer solchen Auslegung kann der Traktor auch für Querfahrt verwendet werden, wozu der Fahrerstand samt Pedalerie um ca. 90° gegenüber seiner normalen, nach vorn gerichteten Position gedreht wird.

Wenngleich die Erfindung vorstehend primär unter Bezugnahme auf einen Traktor erläutert wurde, versteht es sich, dass die Erfindung auch entsprechende andersartige Kraftfahrzeuge mit kombinierter Achsschenkel- und Knicklenkung umfasst.

## Patentansprüche

1. Kraftfahrzeug mit
- einem vorderen Fahrzeugteil (1) mit einem oder mehreren Vorderrädern (6a, 6b),
- einem hinteren Fahrzeugteil (2) mit einem oder mehreren Hinterrädern (8a, 8b),
- einer Achsschenkellenkung (11) zur Einstellung eines Achsschenkel-Lenkwinkels (AL) an dem oder den Vorder- und/oder Hinterrädern und
- einer Knicklenkung (4) zur Einstellung eines Knicklenkwinkels (KL), um den der vordere und der hintere Fahrzeugteil gegeneinander um eine vertikale Achse (3) drehbar sind,
**dadurch gekennzeichnet, dass**
- die Knicklenkung (4) darauf ausgelegt ist, den Knicklenkwinkel (KL) in Abhängigkeit von einer Fahrgeschwindigkeit (v) des Kraftfahrzeugs gemäß einer Knicklenkwinkel/Fahrgeschwindigkeits-Charakteristik variabel derart einzustellen, dass der Knicklenkwinkel (KL) mit steigender Fahrgeschwindigkeit innerhalb eines vorgebbaren Fahrgeschwindigkeitsbereichs sukzessive abnimmt.

2. Kraftfahrzeug nach Anspruch 1, weiter **dadurch gekennzeichnet, dass** die Knicklenkwinkel/Fahrgeschwindigkeits-Charakteristik in Abhängigkeit vom Achsschenkel-Lenkwinkel (AL) vorgebbar ist.

3. Kraftfahrzeug nach Anspruch 1 oder 2, weiter **dadurch gekennzeichnet, dass** die Knicklenkung darauf ausgelegt ist, den Knicklenkwinkel (KL) mit bis zu einem vorgebbaren Schwellwert ansteigender Fahrgeschwindigkeit (v) abnehmend einzustellen und ihn bei Fahrgeschwindigkeiten über dem Schwellwert konstant zu halten.

4. Kraftfahrzeug nach Anspruch 3, weiter **dadurch gekennzeichnet, dass** die Konstanthaltung in einer Nullstellung erfolgt.

5. Kraftfahrzeug nach Anspruch 3 oder 4, weiter **dadurch gekennzeichnet, dass** der Fahrgeschwindigkeits-Schwellwert zwischen 5km/h und 50km/h liegt.

6. Kraftfahrzeug nach einem der Ansprüche 1 bis 5, weiter **dadurch gekennzeichnet, dass** die Knicklenkung (4) darauf ausgelegt ist, den Knicklenkwinkel (KL) mit ansteigendem Achsschenkel-Lenkwinkel (AL) in einem niedrigeren Fahrgeschwindigkeitsbereich ansteigend und in einem höheren Fahrgeschwindigkeitsbereich abnehmend einzustellen.

7. Kraftfahrzeug nach einem der Ansprüche 1 bis 6, weiter **dadurch gekennzeichnet, dass** ein Maximalwert für den Knicklenkwinkel (KL) zwischen 20% und 40% eines Maximalwertes für den Achsschenkel-Lenkwinkel (AL) beträgt.

8. Kraftfahrzeug nach einem der Ansprüche 1 bis 7, weiter **dadurch gekennzeichnet, dass** ein Maximalwert für den Knicklenkwinkel (KL) zwischen 10° und 50° beträgt und/oder ein Maximalwert für den Achsschenkel-Lenkwinkel (AL) zwischen 30° und 70° beträgt.

9. Kraftfahrzeug nach einem der Ansprüche 1 bis 8, weiter **dadurch gekennzeichnet, dass** die Achsschenkellenkung (11) darauf ausgelegt ist, den Achsschenkel-Lenkwinkel (AL) gemäß einer Fahrerlenkvorgabe einzustellen, und die Knicklenkung (4) darauf ausgelegt ist, einen Knicklenkwinkel-Sollwert in Abhängigkeit von einer Istwertinformation des Achsschenkel-Lenkwinkels (AL) festzulegen.

10. Kraftfahrzeug nach einem der Ansprüche 1 bis 9, **dadurch gekennzeichnet, dass** das Kraftfahrzeug ein landwirtschaftliches Zugfahrzeug ist.

## Claims

1. A motor vehicle, comprising
- a front end vehicle part (1) with one or more front wheels (6a, 6b),
- a rear end vehicle part (2) with one or more rear wheels (8a, 8b),
- a stub axle steering (11) for adjusting a stub axle steering angle (AL) on the one or more front and/or rear wheels, and
- an articulated steering (4) for adjusting an articulated steering angle (KL) about which the front end and the rear end vehicle parts are pivotable relative to another about a vertical axis (3),
**characterized in that**
- the articulated steering (4) is configured so as to variably adjust the articulated steering angle (KL) as a function of a driving velocity (v) of the motor vehicle according to an articulated steering angle/driving velocity characteristic in such a manner that the articulated steering angle (KL) decreases successively with increasing driving velocity within a predeterminable driving velocity range.

2. The motor vehicle according to claim 1, further **characterized in that** the articulated steering angle/driving velocity characteristic is predeterminable as a function of the stub axle steering angle (AL).

3. The motor vehicle according to claim 1 or 2, further **characterized in that** the articulated steering is configured so as to adjust the articulated steering angle (KL) to be decreasing with the driving velocity (v) increasing up to a predeterminable threshold value and to maintain the KL constant at driving velocities higher than the threshold value.

4. The motor vehicle according to claim 3, further **characterized in that** maintaining constant is in a neutral position.

5. The motor vehicle according to claim 3 or 4, further **characterized in that** the driving velocity threshold value is between 5 km/h and 50 km/h.

6. The motor vehicle according to any one of the claims 1 to 5, further **characterized in that** the articulated steering (4) is configured so as to adjust the articulated steering angle (KL) to be increasing with increasing stub axle steering angle (AL) in a lower driving velocity range and to adjust it to be decreasing in a higher driving velocity range.

7. The motor vehicle according to any one of the claims 1 to 6, further **characterized in that** a maximum value for the articulated steering angle (KL) is between 20 % and 40 % of the maximum value for the stub axle steering angle (AL).

8. The motor vehicle according to any one of the claims 1 to 7, further **characterized in that** a maximum value for the articulated steering angle (KL) is between 10° and 50° and/or a maximum value for the stub axle steering angle (AL) is between 30° and 70°.

9. The motor vehicle according to any one of the claims 1 to 8, further **characterized in that** the stub axle steering (11) is configured so as to adjust the stub axle steering angle (AL) according to a driver steering predetermination, and the articulated steering (4) is configured so as to set the articulated steering angle nominal value as a function of actual value information of the stub axle steering angle (AL).

10. The motor vehicle according to any one of the claims 1 to 9, **characterized in that** the motor vehicle is an agricultural tractor vehicle.

## Revendications

1. Véhicule automobile doté :
d'une partie de véhicule avant (1) dotée d'une ou de plusieurs roues avant (6a, 6b) ;
d'une partie de véhicule arrière (2) dotée d'une ou de plusieurs roues arrière (8a, 8b) ;
d'une direction de fusée d'essieu (11) servant au réglage d'un angle de direction de fusée d'essieu (AL) au niveau de la ou des roues avant et/ou arrière ; et
d'une direction articulée (4) servant au réglage d'un angle de direction articulée (KL) autour duquel les parties de véhicule avant et arrière peuvent être pivotées l'une contre l'autre autour d'un axe vertical (3) ;
**caractérisé en ce que** :
la direction articulée (4) est conçue pour permettre de régler de façon variable l'angle de direction articulée (KL) en fonction d'une vitesse de conduite (v) du véhicule automobile selon une caractéristique d'angle de direction articulée/vitesse de conduite de telle sorte que l'angle de direction articulée (KL) décroît successivement à l'intérieur d'une plage de vitesse de conduite prédéfinissable à mesure que la vitesse de conduite augmente.

2. Véhicule automobile selon la revendication 1, **caractérisé en outre en ce que** la caractéristique d'angle de direction articulée/vitesse de conduite peut être prédéfinie en fonction de l'angle de direction de fusée d'essieu (AL).

3. Véhicule automobile selon la revendication 1 ou 2, en outre **caractérisé en ce que** la direction articulée est conçue pour régler l'angle de direction articulée (KL) de façon décroissante avec jusqu'à une valeur seuil prédéfinissable lorsque la vitesse de conduite (v) augmente et pour le maintenir constant en présence de vitesses de conduite dépassant la valeur seuil.

4. Véhicule automobile selon la revendication 3, en outre **caractérisé en ce que** le maintien à niveau constant se produit dans une position neutre.

5. Véhicule automobile selon la revendication 3 ou 4, en outre **caractérisé en ce que** la valeur seuil de vitesse de conduite est comprise entre 5km/h et 50km/h.

6. Véhicule automobile selon l'une quelconque des revendications 1 à 5, en outre **caractérisé en ce que** la direction articulée (4) est conçue pour régler, en présence d'un angle de direction de fusée d'essieu (AL) croissant, l'angle de direction articulée (KL) de façon croissante dans une plage de vitesses de conduite inférieure et de façon décroissante dans une plage de vitesses de conduite supérieure.

7. Véhicule automobile selon l'une quelconque des revendications 1 à 6, en outre **caractérisé en ce qu'**une valeur maximale est comprise, pour l'angle de direction articulée (KL), entre 20 % et 40 % d'une valeur maximale pour l'angle de direction de fusée d'essieu (AL).

8. Véhicule automobile selon l'une quelconque des revendications 1 à 7, en outre **caractérisé en ce qu'**une valeur maximale est comprise, pour l'angle de direction articulée (KL), entre 10° et 50° et/ou qu'une valeur maximale est comprise, pour l'angle de direction de fusée d'essieu (AL), entre 30° et 70°.

9. Véhicule automobile selon l'une quelconque des revendications 1 à 8, en outre **caractérisé en ce que** la direction de fusée d'essieu (11) est conçue pour régler l'angle de direction de fusée d'essieu (AL) selon une instruction de pilotage du conducteur et que la direction articulée (4) est conçue pour déterminer la valeur théorique de l'angle de direction articulée en fonction d'une information de valeur réelle de l'angle de direction de fusée d'essieu (AL).

10. Véhicule automobile selon l'une quelconque des revendications 1 à 9, **caractérisé en ce que** le véhicule automobile est un tracteur agricole.
